# EUROPEAN PATENT SPECIFICATION

(11) **EP 4 084 174 B1**
(45) Date of publication and mention of the grant of the patent: **11.11.2026**
(21) Application number: 21872748.5
(22) Date of filing: 27.08.2021
(51) Int. Cl.: H01M 10/04

(54) **WINDING DEVICE**
WICKELVORRICHTUNG
APPAREIL D'ENROULEMENT

(30) Priority: 24.09.2020 KR 20200123679; 25.08.2021 KR 20210112409
(43) Date of publication of application: 02.11.2022
(73) Proprietor: LG Energy Solution, Ltd., Seoul 07335 (KR)
(72) Inventor: LEE, Younghak, Daejeon 34122 (KR); KIM, Jun Wan, Daejeon 34122 (KR)
(74) Representative: Goddar, Heinz J.
(86) International application number: PCT/KR2021/011545
(87) International publication number: WO 2022/065718

(56) References cited:
- CN-U- 204 230 366
- JP-A- 2000 335 792
- JP-A- 2014 107 237
- KR-A- 20090 100 207
- KR-A- 20110 074 375
- KR-A- 20150 089 558
- US-A1- 2011 174 540

## Description

### [TECHNICAL FIELD]

### Cross Citation with Related Application(s)

This application claims the benefit of Korean Patent Application No. 10-2020-0123679 filed on September 24, 2020 and Korean Patent Application No. 10-2021-0112409 filed on August 25, 2021 in the Korean Intellectual Property Office.

The present disclosure relates to a winding device, and more particularly to a winding device for winding an electrode assembly.

### [BACKGROUND]

Recently, as energy source price is increasing due to the depletion of fossil fuels and increasing interest is being paid to environmental pollution, the demand for environmentally-friendly alternative energy sources is bound to play an important role in the future life. Thus, research into techniques for generating various kinds of power, such as nuclear energy, solar energy, wind energy, and tidal power, is underway, and power storage apparatuses for more efficient use of the generated energy are also drawing much attention.

In particular, as technology development and demands for mobile devices increase, the demand for batteries as energy sources is rapidly increasing. Accordingly, many researches on batteries capable of meeting diverse demands have been conducted. In recent years, batteries have also been used in electric vehicles, and the use range is gradually expanded.

Typically, the demand for the lithium secondary battery, such as a lithium ion battery or a lithium ion polymer battery, which have advantages such as a high energy density, a discharge voltage, an output stability, and the like is high.

The secondary battery may be classified based on how the electrode assembly, having a structure in which a positive electrode, a negative electrode, and a separator interposed between the positive electrode and the negative electrode are stacked, is structured. Typically, the electrode assembly may include a jelly-roll (wound) type electrode assembly in which long sheet type positive electrodes and long sheet type negative electrodes are wound with a separator being interposed therebetween, and a stacked (laminated) type electrode assembly in which a plurality of positive electrodes and negative electrodes, cut into predetermined unit sizes, are sequentially stacked with separators being interposed therebetween, and the like. Recently, in order to solve the problems involved in the jelly-roll type electrode assembly and the stacked type electrode assembly, there has been developed a stack/folding type electrode assembly having an improved structure, which is a combination of the jelly-roll type electrode assembly and the stacked type electrode assembly. The stack/folding type electrode assembly has a structure in which the positive electrodes and the negative electrodes taken in predetermined units are sequentially wound with separators being disposed between the two electrodes.

Further, the secondary battery is classified based on the shape of a battery case into a cylindrical battery having an electrode assembly mounted in a cylindrical case, a prismatic battery having an electrode assembly mounted in a prismatic case, or a pouch-shaped case having an electrode assembly mounted in a pouch-shaped case formed of an aluminum laminate sheet. Among them, the cylindrical battery and the jelly-roll type or stack/folding type electrode assemblies have an advantage of having high energy density.

In the fabrication of an electrode assembly including such a winding process, an electrode assembly can be fabricated by the process of inserting a laminate comprising a positive electrode, a negative electrode and a separator into a mandrel, winding the laminate around the mandrel and then removing the mandrel.

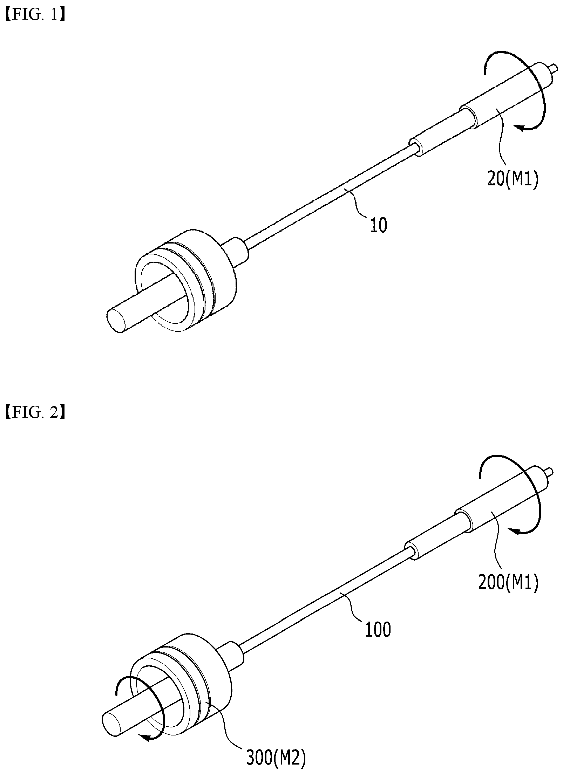

Fig. 1 is a view showing a conventional electrode laminate winding device that rotates by uniaxial driving.

Referring to Fig. 1, the conventional winding device may include a mandrel 10, and a driving unit 20 that rotates through a motor M1 formed on one side of the mandrel. According to the related art, the electrode laminate was wound by rotating the mandrel by uniaxial driving through only the driving unit 20 formed on one side of the mandrel in this way. However, when the electrode laminate is wound through uniaxial driving in this way, cracks may occur in the electrode laminate due to a torsion angle of the mandrel 10 and an increase in concentrated load.

In particular, recently, as the demand for a large-capacity battery increases and the electrode becomes larger, these problems are more serious.

As a further prior art, JP2000 335792 A discloses a winding machine in which a strip-shaped electrode laminate is wound around a winding core held between two rotary shafts. The rotary shafts are synchronously driven by a single motor through a common drive shaft and driven pulleys.

### [DETAILED DESCRIPTION OF THE INVENTION]

### [Technical Problem]

It is an object of the present disclosure to provide a winding device that minimizes cracks occurring on electrodes and the like during winding process of an electrode laminate.

The objects of the present disclosure are not limited to the aforementioned objects, and other objects which are not described herein should be clearly understood by those skilled in the art from the following detailed description.

### [Technical Solution]

According to one embodiment of the present disclosure, there is provided an electrode winding device for winding an electrode laminate, as defined in claim 1. The winding device comprises a mandrel for winding the electrode laminate; and first and second rotation driving units formed at both ends of the mandrel to rotate the mandrel.

The first and second rotation driving units may provide a rotational force to rotate the mandrel. At this time, the first and second rotation driving units each independently rotate the mandrel, and the first and second rotation driving units may have the same rotation speed.

Here, the first and second rotation driving units include a motor, respectively.

The first and second rotation driving units may have a structure in which a hollow having an inner diameter corresponding to an outer diameter of the mandrel is formed so that the mandrel can be inserted, and the first and second rotation driving units may be fastened to the mandrel in a state in which the mandrel is inserted.

The electrode laminate may be formed by stacking a sheet-type positive electrode, a sheet-type negative electrode, or may be one in which unit cells are arranged on a sheet-type separator.

The mandrel may be formed in the shape of a cylindrical rod.

In the winding device as described above, a torsion angle of the mandrel due to the rotation of the first and second rotation driving units may be 0.004 degrees or less, and a maximum stress acting on the electrode assembly by the rotation of the first rotation driving unit and the second rotation driving unit may be 15 MPa or less.

### [BRIEF DESCRIPTION OF THE DRAWINGS]

Fig. 1 is a view showing a conventional winding device that rotates by a uniaxial driving;
Fig. 2 is a view showing a winding device according to an embodiment of the present disclosure;
Fig. 3 is a graph in which the torsion angle acting on the electrode laminate wound in the winding device rotating by the biaxial driving according to an embodiment of the present disclosure is compared with the torsion angle acting on the electrode stack body wound in the winding device that rotates by the uniaxial driving according to the related art; and
Fig. 4 is a graph in which the stress acting on the electrode laminate wound in the winding device rotating by the biaxial driving according to an embodiment of the present disclosure is compared with the stress acting on the electrode laminate wound in the winding device that rotates by uniaxial driving according to the related art.

### [DETAILED DESCRIPTION OF THE EMBODIMENTS]

Hereinafter, various embodiments of the present disclosure will be described in detail with reference to the accompanying drawings so that those skilled in the art can easily implement them. The present disclosure can be modified in various different ways, and is not limited to the embodiments set forth herein.

Portions that are irrelevant to the description will be omitted to clearly describe the present disclosure, and like reference numerals designate like elements throughout the specification.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are shown to be exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Hereinafter, with reference to FIG. 2, a winding device according to an embodiment of the present invention will be described.

Fig. 2 is a view showing a winding device according to an embodiment of the present disclosure.

Referring to Fig. 2, the winding device according to an embodiment of the present disclosure includes a mandrel 100 for winding the electrode laminate, and first and second rotation driving units 200 and 300 formed at both ends of the mandrel 100 to rotate the mandrel 100.

The mandrel 100 winds up an electrode laminate. The electrode laminate may be formed by laminating a sheet-type positive electrode, a sheet-type negative electrode, and a sheet-type separator, or may be one in which unit cells are arranged on a sheet-type separator. The electrode laminate can be wound around the mandrel 100 to form a jelly-roll type or a stack/folding type electrode assembly. Such an electrode assembly may be inserted into a cylindrical battery case.

The unit cell means a mono-cell, which is an electrode or a laminate of one electrode and a separator, a bi-cell laminated so that electrodes of the same polarities are arranged at both ends, a full cell laminated so that electrodes of different polarities are arranged at both ends, and the like.

The mandrel 100 may be formed in the shape of a cylindrical rod. While the outer surface of the cylindrical rod rotates, the electrode laminate in contact with the outer surface can be wound up.

According to the present embodiment, the winding device includes first and second rotation driving units 200 and 300 formed at both ends of the mandrel 100 to rotate the mandrel 100. At this time, the first and second rotation driving units 200 and 300 provide a rotational force to the electrode laminate to rotate the mandrel 100. At this time, the first and second rotation driving units 200 and 300 each independently rotate the mandrel 100.

For example, the first and second rotation driving units 200 and 300 include motors M1 and M2, respectively, and the motors M1 and M2 can provide a rotational force to rotate the mandrel, 100.

Therefore, the rotational force of the mandrel 100 can be improved and the mandrel 100 can be rotated more precisely, thereby more facilitating the rotation control of the mandrel 100, as compared with the case of rotating the mandrel 100 using a single motor.

Further, according to the present embodiment, the rotation speeds of the first and second rotation driving units 200 and 300 may be the same. If the rotational speeds of both ends of the mandrel 100 that rotates by biaxial driving are different, cracks may occur due to an increase in the torsion angle of the mandrel 100 and an increase in the stress acting on the electrode laminate to be wound. Therefore, according to the present embodiment, by equalizing the rotation speeds of the first and second rotation driving units to minimize the torsion angle, it is also possible to reduce and disperse the acting stress applied to the electrode laminate to be wound.

The first and second rotation driving units 200 and 300 are not limited as long as they have a structure that can connect to the mandrel 100 and rotate the mandrel 100. However, it is more preferable that the mandrel 100 and the first and second rotation driving units 200 and 300 are detachably formed so that they can be easily replaced when they have been consumed. Therefore, for example, they may have a structure in which a hollow having an inner diameter corresponding to the outer diameter of the mandrel is formed so that the mandrel 100 is inserted.

Further, in such a structure, the mandrel 100 must be fixed so as to be fully operated by the rotational force of the first and second rotation driving units 200 and 300. Therefore, the first and second rotation driving units 200 and 300 may be mechanically fastened to the mandrel 100 in a state in which the mandrel 100 is inserted.

Conventionally, as shown in Fig. 1, a rotation driving unit was provided only at one end of the mandrel and thus the mandrel was rotated in a uniaxial driving manner to wind up the electrode laminate. When the uniaxial driving method is adopted in this way, the torsion angle of the mandrel increases, the acting stress increases, and it is highly likely that cracks occur in the wound electrode laminate.

On the other hand, according to the present embodiment, as shown in Fig. 2, first and second rotation driving units 200 and 300 are provided on both sides of the mandrel 100, respectively, so that the mandrel 100 rotates in a biaxial driving manner, thereby reducing the torsion angle of the mandrel 100 and can reduce the acting stress. Thereby cracks, damage and the like occurring in the electrode laminate during winding can be minimized. These effects are more remarkable as the electrode is rougher, that is, as the size of the electrode laminate is larger and as the length of the electrode is larger.

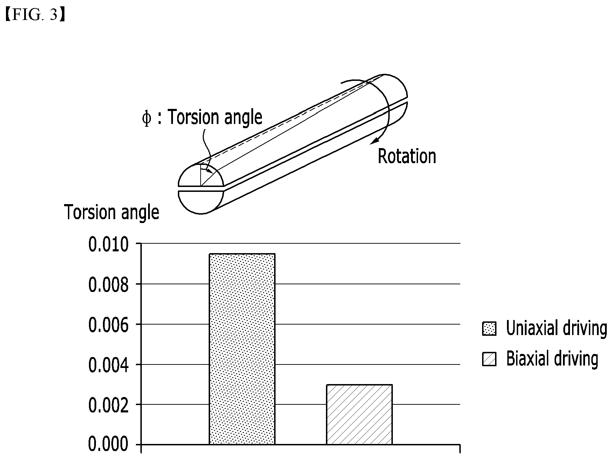

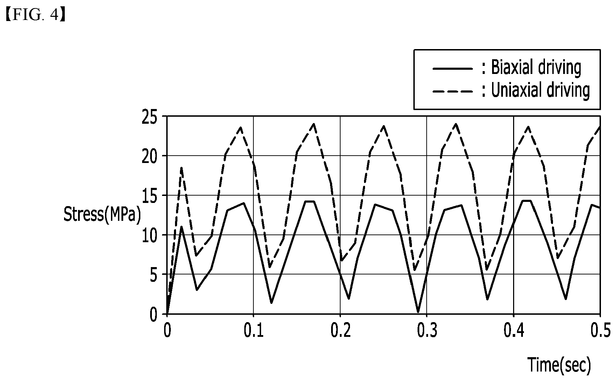

Hereinafter, with reference to Figs. 3 and 4, a biaxial drive type winding device according to an embodiment of the present disclosure and a uniaxial drive type winding device according to the related art will be compared and described.

Fig. 3 is a graph in which the torsion angle acting on the electrode laminate wound in the winding device rotating by the biaxial driving according to an embodiment of the present disclosure is compared with the torsion angle acting on the electrode stack body wound in the winding device that rotates by the uniaxial driving according to the related art. Fig. 4 is a graph in which the stress acting on the electrode laminate wound in the winding device rotating by the biaxial driving according to an embodiment of the present disclosure is compared with the stress acting on the electrode laminate wound in the winding device that rotates by uniaxial driving according to the related art.

Referring to Fig. 3, it can be seen that in the biaxial drive type winding device according to the present embodiment, the torsion angle acting on the mandrel is lowered, as compared with the torsion angle acting on the mandrel in the uniaxial drive type winding device. The torsion angle can be obtained by laminating one positive electrode, one negative electrode, and two separators on a mandrel having a length of 12 cm and a diameter of 0.34 cm, rotating the laminate at an equal speed of 360RPM, and measuring the displacement of both ends of the wound electrode laminate.

Specifically, when the winding device according to the present disclosure is used, the torsion angle of the mandrel may be 0.004 degrees or less. Even if the length of the mandrel increases as the size of the electrode laminate increases, according to the present disclosure which is a biaxial driving method, the torsion angle does not change significantly and can be maintained at a low value.

Further, referring to Fig. 4, it can be seen that as compared with the stress acting on the electrode laminate wound in the uniaxial drive type winding device, the stress acting on the electrode laminate wound in the biaxial type winding device is reduced. The stress can be obtained by laminating a positive electrode having a size of 61 mm x 6 cm, and an negative electrode having a size of 582 cm x 5.8 cm, and a separator having a size of 63 cm x 6.13 cm so that the separator is interposed between the positive electrode and the negative electrode, and measuring the displacement of both ends of an electrode laminated body using a laser displacement sensor when winding at a speed of 360RPM using a mandrel with a length of 12cm and a diameter of 0.34 cm.

Specifically, when using the winding device according to the present disclosure, a maximum stress acting on the electrode laminate by the rotation of the first and second rotation driving units may be 15 MPa or less. This maximum stress also increases as the size of the electrode laminate increases. Even if the length of the mandrel is increased, according to the present invention which is a biaxial driving method, it is possible to maintain a low value without a large change.

Therefore, the winding device of the present disclosure is more effective as the size of the electrode stack increases.

Through this, during the electrode winding process, the torsion angle of the mandrel is lowered through biaxial driving, and the stress acting on the electrode laminate are lowered and dispersed, thereby capable of minimizing cracks in the electrode laminate that occur through winding.

Although the invention has been shown and described above with reference to the preferred embodiments, the scope of the present disclosure is not limited thereto, and numerous other modifications and embodiments can be devised by those skilled in the art, within the scope of the appended claims.

### [Description of Reference Numerals]

100: mandrel
200: first rotation driving unit
300: second rotation driving unit

### [Effect of Invention]

According to an embodiment of the present invention, there is provided a winding device capable of reducing cracks in an electrode stack through a twist angle reduction and load dispersing effect by providing a winding device capable of double-axial driving of the winding core during the winding process of the electrode stack.

Effects of the present invention are not limited to the effects mentioned above, and other effects not mentioned will be clearly understood by those skilled in the art from the description of the claims.

## Claims

1. An electrode winding device for winding an electrode laminate, comprising:
a mandrel (100) for winding the electrode laminate; and
first and second rotation driving units (200, 300) respectively formed at opposite ends of the mandrel (100) to rotate the mandrel (100),
wherein the first and second rotation driving units (200, 300) comprise a motor (M1, M2), respectively.
wherein the first and second rotation driving units (200, 300) each independently rotate the mandrel (100).

2. The electrode winding device of claim 1, wherein:
the first and second rotation driving units (200, 300) provide a rotational force to rotate the mandrel (100).

3. The electrode winding device of claim 1, wherein:
the first and second rotation driving units (200, 300) have the same rotation speed.

4. The electrode winding device of claim 1, wherein:
the first and second rotation driving units (200, 300) have a structure in which a hollow having an inner diameter corresponding to an outer diameter of the mandrel (100) is formed so that the mandrel (100) can be inserted.

5. The electrode winding device of claim 4, wherein:
the first and second rotation driving units (200, 300) are mechanically fastened to the mandrel (100) in a state in which the mandrel (100) is inserted.

6. The electrode winding device of claim 1, wherein:
the electrode laminate is formed by stacking a sheet-type positive electrode, a sheet-type negative electrode, or is one in which unit cells are arranged on a sheet-type separator.

7. The electrode winding device of claim 1, wherein:
the mandrel (100) is formed in the shape of a cylindrical rod.

8. The electrode winding device of claim 1, wherein:
the first and the second rotation driving units (200, 300) are configured to rotate the mandrel (100) such that a torsion angle of the mandrel (100) is 0.004 degrees or less.

9. The electrode winding device of claim 1, wherein:
the first and the second rotation driving units (200, 300) are configured to rotate the mandrel (100) such that a maximum stress acting on the electrode assembly is 1₅ MPa or less.

## Patentansprüche

1. Elektrodenwickelvorrichtung zum Wickeln eines Elektrodenlaminats, aufweisend:
einen Dorn (100) zum Wickeln des Elektrodenlaminats; und
eine erste Drehantriebseinheit und eine zweite Drehantriebseinheit (200, 300), die jeweils an gegenüberliegenden Enden des Dorns (100) ausgebildet sind, zur Drehung des Dorns (100),
wobei die erste Drehantriebseinheit und die zweite Drehantriebseinheit (200, 300) jeweils einen Motor (M1, M2) aufweisen,
wobei die erste Drehantriebseinheit und die zweite Drehantriebseinheit (200, 300) voneinander unabhängig den Dorn (100) drehen.

2. Elektrodenwickelvorrichtung nach Anspruch 1, wobei:
die erste Drehantriebseinheit und die zweite Drehantriebseinheit (200, 300) eine Drehkraft zur Drehung des Dorns (100) bereitstellen.

3. Elektrodenwickelvorrichtung nach Anspruch 1, wobei:
die erste Drehantriebseinheit und die zweite Drehantriebseinheit (200, 300) die gleiche Drehgeschwindigkeit aufweisen.

4. Elektrodenwickelvorrichtung nach Anspruch 1, wobei:
die erste Drehantriebseinheit und die zweite Drehantriebseinheit (200, 300) eine Struktur aufweisen, in der ein Hohlraum mit einem Innendurchmesser, der einem Außendurchmesser des Dorns (100) entspricht, so ausgebildet ist, dass der Dorn (100) eingesetzt werden kann.

5. Elektrodenwickelvorrichtung nach Anspruch 4, wobei:
die erste Drehantriebseinheit und die zweite Drehantriebseinheit (200, 300) in einem Zustand, in dem der Dorn (100) eingesetzt ist, mechanisch an dem Dorn (100) befestigt sind.

6. Elektrodenwickelvorrichtung nach Anspruch 1, wobei:
das Elektrodenlaminat durch Stapeln einer blattartigen positiven Elektrode, einer blattartigen negativen Elektrode gebildet ist oder eine solche ist, bei der Einheitszellen auf einem folienartigen Separator angeordnet sind.

7. Elektrodenwickelvorrichtung nach Anspruch 1, wobei:
der Dorn (100) in der Form eines zylindrischen Stabs gebildet ist.

8. Elektrodenwickelvorrichtung nach Anspruch 1, wobei:
die erste Drehantriebseinheit und die zweite Drehantriebseinheit (200, 300) so konfiguriert sind, dass sie den Dorn (100) so drehen, dass ein Torsionswinkel des Dorns (100) 0,004 Grad oder weniger beträgt.

9. Elektrodenwickelvorrichtung nach Anspruch 1, wobei:
die erste Drehantriebseinheit und die zweite Drehantriebseinheit (200, 300) so konfiguriert sind, dass sie den Dorn (100) so drehen, dass eine maximale Belastung, die auf die Elektrodenanordnung wirkt, 15 MPa oder weniger beträgt.

## Revendications

1. Dispositif d'enroulement d'électrode pour enrouler un stratifié d'électrode, comprenant :
un mandrin (100) pour enrouler le stratifié d'électrode ; et
des première et deuxième unités d'entraînement de rotation (200, 300) formées respectivement au niveau d'extrémités opposées du mandrin (100) pour faire tourner le mandrin (100),
dans lequel les première et deuxième unités d'entraînement de rotation (200, 300) comprennent un moteur (M1, M2), respectivement.
dans lequel les première et deuxième unités d'entraînement de rotation (200, 300) font chacune tourner de manière indépendante le mandrin (100).

2. Dispositif d'enroulement d'électrode de la revendication 1, dans lequel :
les première et deuxième unités d'entraînement de rotation (200, 300) fournissent une force rotationnelle pour faire tourner le mandrin (100).

3. Dispositif d'enroulement d'électrode de la revendication 1, dans lequel :
les première et deuxième unités d'entraînement de rotation (200, 300) ont la même vitesse de rotation.

4. Dispositif d'enroulement d'électrode de la revendication 1, dans lequel :
les première et deuxième unités d'entraînement de rotation (200, 300) ont une structure dans laquelle un creux, ayant un diamètre interne correspondant à un diamètre externe du mandrin (100), est formé de sorte que le mandrin (100) peut être inséré.

5. Dispositif d'enroulement d'électrode de la revendication 4, dans lequel :
les première et deuxième unités d'entraînement de rotation (200, 300) sont fixées mécaniquement au mandrin (100) dans un état dans lequel le mandrin (100) est inséré.

6. Dispositif d'enroulement d'électrode de la revendication 1, dans lequel :
le stratifié d'électrode est formé grâce à l'empilement d'une électrode positive de type en feuille, d'une électrode négative de type en feuille, ou est un stratifié dans lequel des cellules unitaires sont agencées sur un séparateur de type en feuille.

7. Dispositif d'enroulement d'électrode de la revendication 1, dans lequel :
le mandrin (100) est formé sous la forme d'une tige cylindrique.

8. Dispositif d'enroulement d'électrode de la revendication 1, dans lequel :
la première et la deuxième unités d'entraînement de rotation (200, 300) sont configurées pour faire tourner le mandrin (100) de telle sorte qu'un angle de torsion du mandrin (100) soit de 0,004 degré ou moins.

9. Dispositif d'enroulement d'électrode de la revendication 1, dans lequel :
la première et la deuxième unités d'entraînement de rotation (200, 300) sont configurées pour faire tourner le mandrin (100) de telle sorte qu'une contrainte maximale agissant sur l'ensemble électrode soit de 15 MPa ou moins.
